# FASCICULE DE BREVET EUROPEEN

(11) **EP 2 079 957 B1**
(45) Date de publication et mention de la délivrance du brevet: **07.05.2014**
(21) Numéro de dépôt: 07858441.4
(22) Date de dépôt: 15.10.2007
(51) Int. Cl.: F16L 37/084, F16L 37/14, F16L 58/18, F02M 37/00

(54) **DISPOSITIF DE RACCORDEMENT POUR CIRCUIT DE FLUIDE DE VÉHICULE AUTOMOBILE**
KOPPLUNGSVORRICHTUNG FÜR EINEN FLÜSSIGKEITSKREIS EINES KRAFTFAHRZEUGES
COUPLING DEVICE FOR A FLUID CIRCUIT OF A MOTOR VEHICLE

(30) Priorité: 20.10.2006 FR 0609211
(43) Date de publication de la demande: 22.07.2009
(73) Titulaire: PARKER HANNIFIN MANUFACTURING France SAS, 74100 Ville-la-Grand (FR)
(72) Inventeur: BLIVET, Philippe, 35200 Rennes (FR)
(74) Mandataire: Lavialle, Bruno François Stéphane
(86) Numéro de dépôt international: PCT/FR2007/001679
(87) Numéro de publication internationale: WO 2008/049989

(56) Documents cités:
- EP-A2- 0 629 806
- DE-A1- 10 318 601
- DE-A1-102004 053 541
- US-A1- 2003 121 691

## Description

La présente invention concerne un dispositif de raccordement soit entre elles, soit avec d'autres éléments (filtres, pompes, réservoir...) des diverses canalisations formant un circuit de fluide dans un véhicule automobile.

### ARRIERE PLAN DE L'INVENTION

Le circuit de carburant d'un véhicule automobile est un élément auquel les constructeurs automobiles accordent la plus grande attention au plan de la sécurité. En effet, lors d'un accident, la rupture de ce circuit augmente da manière considérable le risque d'incendie du véhicule. Il convient donc de prévoir des circuits capables de résister à des chocs simulant des accidents auxquels, par des tests, ces circuits sont soumis. Cette exigence s'applique aussi pour d'autres fluides du véhicule tels que le liquide de freinage ou celui des circuits d'assistance.

Pour ce qui concerne les raccords, il semble que des dispositifs métalliques se comportent de manière satisfaisante.

Cependant, ces raccords ne peuvent pas, pour des raisons économiques, être réalisés par usinage. Il faut donc envisager leur fabrication à partir de métaux en feuille, en mettant en oeuvre des procédés de fabrication du type emboutissage, hydroformage... associés à des procédés de découpage, de pliage, et de cintrage.

Le travail du métal en feuille ou en tôle mince comporte des limites intrinsèques en ce qui concerne par exemple les formes géométriques que l'on peut obtenir, les dimensions minimales en dessous desquelles on ne peut descendre, les qualités de surface obtenues, le respect de tolérances précises... En outre, l'obtention d'angles vifs n'est pas possible, si bien que des connexions par tétine avec des reliefs périphériques à arêtes vives ne peuvent être remplacées que par des reliefs à bourrelets qui exigent un collier de serrage externe.

Il s'ensuit qu'un raccord métallique, produit avec des procédés de fabrication compatibles avec le marché, c'est-à-dire par travail de métaux en feuille, présente des inconvénients par rapport à un raccord en matière plastique, notamment en ce qui concerne son encombrement.

Un dispositif de raccordement selon la préambule de la revendication 1 est connu de US 2003/0121691 A1.

### OBJET DE L'INVENTION

Par l'invention, on entend proposer une alternative à la fabrication des raccords métalliques qui allie les avantages de bonne tenue aux chocs de ces derniers aux avantages des raccords en matière plastique en ce qui concerne l'encombrement, les formes et les arêtes vives qui facilitent la réalisation des connexions.

### RESUME DE L'INVENTION

A cet effet donc, l'invention a pour objet un dispositif de raccordement pour circuit de fluide dans un véhicule automobile, comprenant un organe fonctionnel en matière plastique, pourvu d'au moins deux types de moyens de connexion dont au moins un comprend un organe accessible manuellement, en saillie de la surface extérieure de l'organe fonctionnel, ce dispositif comportant selon l'invention un boîtier métallique de protection formé par deux coques réunies par une jonction de bords en correspondance des coques autour de l'organe fonctionnel, ce boîtier étant pourvu d'une fenêtre d'accès à l'organe accessible manuellement. Il faut entendre par fenêtre une ouverture dont le bord est continu, traversé ou non par le plan de la jonction.

Par cette architecture, la coque de protection selon l'invention présente une bonne résistance. Cependant, de manière préférée, la fenêtre est ménagée par découpe d'une coque de sorte qu'aucun de ses bords n'est traversé par la couture. La résistance aux chocs en est augmentée.

Parmi le avantages de l'invention, on mentionnera en outre le fait que le dimensionnement des coques, qui ne participent pas à la fonction de raccordement, peut être moins précis que celui des corps de raccords métalliques. Il s'ensuit une fabrication plus économique qui ne vient pas grever outre mesure le prix total du dispositif de raccordement.

Dans le cas où l'autre des moyens de connexion est une tétine à reliefs, l'une des coques au moins constitue un moyen de cerclage d'un tube sur cette tétine de connexion renforçant leur liaison mutuelle. Il s'agit donc d'un simple écrasement radial d'une partie cylindrique de la coque en forme de manchon ou il peut s'agir, de l'écrasement ou du repliement d'une languette découpée dans la partie de la coque en forme de manchon qui entoure la tétine de connexion et le tube qui y est associé.

Si les circuits le requièrent, la fixation des dispositifs de raccordement à un élément de structure du véhicule peut être réalisée justement par l'intermédiaire du boîtier selon l'invention.

D'autre caractéristiques et avantages de l'invention ressortiront de la description donnée ci-après d'un exemple de sa réalisation dans une géométrie coudée du dispositif de raccordement.

### BREVE DESCRIPTION DES DESSINS

IL sera fait référence aux dessins annexés parmi lesquels :
- la figure 1 est une vue éclatée d'un dispositif de raccordement coudé selon l'invention,
- la figure 2 est une vue en perspective extérieure de ce dispositif,
- la figure 3 illustre, par une vue semblable à celle de la figure 2, une variante de réalisation du dispositif de l'invention,
- la figure 4 est une vue en coupe transversale de la figure 3.

### DESCRIPTION DETAILLEE DE L'INVENTION

Aux figures, le dispositif de raccordement représenté comporte un corps 1 en matière plastique, ici de forme coudée, avec un canal interne et comportant deux moyens différents de connexion, l'un formé par une tétine à dents de sapin 2 et l'autre formé par un logement 3 capable de recevoir un embout à collerette, ce logement étant pourvu d'un verrou 4 avec un moyen de manoeuvre 4a qui fait saillie par rapport à la surface extérieure du corps 1. Ce corps 1 équipé comme décrit ci-dessus, constitue un raccord en matière plastique connu habituellement utilisé pour la réalisation de circuits hydrauliques.

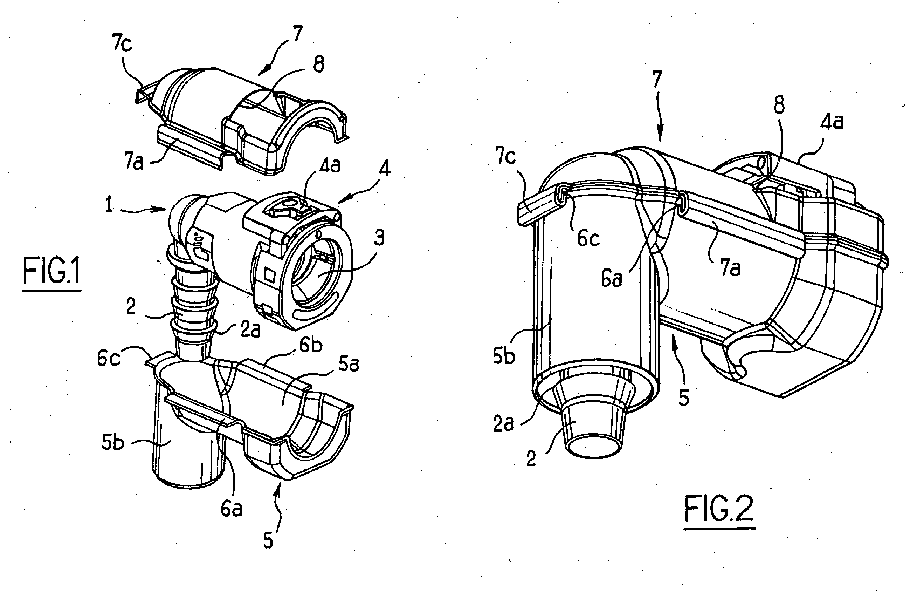

Pour une utilisation de ce raccord dans le domaine du transport de fluide dangereux ou polluant dans les véhicules automobiles, ce raccord est équipé d'une sorte d'armure métallique en forme de boîtier composé de deux coques 5 et 7. La coque 5 définit un berceau 5a et, perpendiculairement à l'axe de ce berceau, un manchon 5b qui peuvent accueillir pour le berceau la partie inférieure du corps principal 1 et pour le manchon la tétine 2. Une coque 7 également en berceau est prévue pour venir coopérer avec la coque 5 afin d'enfermer le corps 1, cette coopération étant réalisée par ce qu'on appelle une couture, c'est-à-dire la jonction par tout moyen approprié (pliage, soudure, rivetage, collage...) des bords en correspondance des coques 5 et 7 qui sont ici dans un plan unique. Dans le cas particulier, la coque 5 est pourvue de trois pattes extérieures 6a, 6b, 6c tandis que la coque 7 comporte également trois pattes 7a, 7b (non visible sur la figure) et 7c. La liaison par "couture" des deux coques 5 et 7 est réalisée par repliage des pattes 7 sur les pattes 6 et rabattement de l'ensemble comme illustré à la figure 2.

Une particularité de la coque 7 consiste dans le fait qu'elle comporte une fenêtre 8 découpée dans la paroi métallique qui la forme, de sorte que le bord de cette fenêtre est continu. Cette fenêtre, comme illustré par la figure 2, laisse passer un organe 4a d'actionnement manuel du verrou 4 sans pour autant que la coque 7 soit substantiellement affaiblie du point de vue de sa résistance mécanique. Quand on choisit de réaliser le boîtier en deux coques latérales et symétriques réunies par couture dans un plan passant par les axes du canal de fluide défini par le corps 1, le plan de couture divise deux bords opposés de la fenêtre 8, ce qui en affaiblit un peu la tenue aux chocs. Pour certains emplois, cette disposition peut convenir. Pour d'autres, il peut être préférable de l'écarter car le manchon 5b n'étant pas en une seule pièce, cela peut présenter des inconvénients.

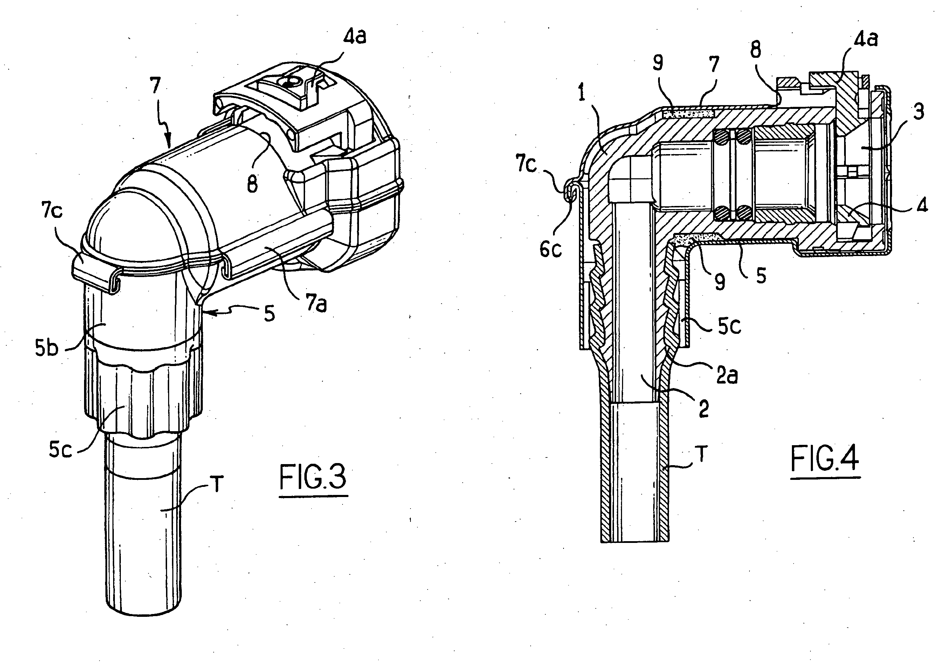

Aux figures 3 et 4, on retrouve la plupart des éléments déjà décrits avec les mêmes références. Le manchon 5b de la coque 5 constitue par déformation radiale (voir les cannelures 5c) un moyen de serrage du tube T venant coiffer la tétine 2 sur cette tétine et les dents de sapin 2a qu'elle comporte. Ce moyen de serrage renforce la liaison entre le moyen de raccordement et le tube T et assure également un assujettissement du boîtier sur le raccord. Cela évite d'avoir un jeu entre le boîtier et le raccord qui pourrait être sous conditions vibratoires la source de bruits.

A cet égard d'ailleurs, on notera que les coques 5 et 7 peuvent être pourvues d'une garniture élastique et absorbante 9 qui vient au contact du corps 1 et qui justement joue un rôle de cale du boîtier par rapport au corps 1 et d'amortissement des mouvements relatifs entre le corps 1 et le boîtier 5, 7.

On notera enfin que le boîtier 5, 7 de l'invention peut comporter par exemple au niveau des zones du plan de joint qui ne sont pas équipées des pattes de couture, d'une ou plusieurs languettes non représentés aux figures par le moyen desquelles on peut fixer le dispositif de raccordement à un élément de structure du véhicule. Ces languettes sont bien sûr issues de la même feuille métallique qui constitue la base de fabrication de l'une et/ou l'autre des coques 5, 7.

Outre sa capacité à mieux résister aux chocs, le dispositif de l'invention est résistant également à l'échauffement qu'il pourrait subir en étant placé au voisinage de sources thermiques qui rayonnent de manière discontinue telles que les pots d'échappement des nouveaux véhicules Diesel au moment où ils sont en phase de brûlage des particules et des suies. Une autre source d'émission de chaleur intense et discontinue est constituée par le dispositif de freinage. Avec le raccord de l'invention, on autorise le constructeur à simplifier le trajet des circuits de fluides, de carburant ou d'huile de freinage, ces circuits étant auparavant dessinés de manière à ce que les dispositifs de raccordement soient éloignés de ces sources thermiques.

Enfin, certaines parties des circuits de transport de carburant, plus généralement de fluides dé véhicule automobile, sont situées sous la caisse du véhicule et donc exposées à diverses projections telles que les gravillons ou les produits corrosifs (solutions de déneigement). Le dispositif de raccordement selon l'invention présente à l'égard de ces agressions une capacité à mieux résister que les dispositifs connus.

## Revendications

1. Dispositif de raccordement pour circuit de fluide pour un véhicule automobile comportant un organe fonctionnel (1) en matière plastique, pourvu d'au moins deux types (2, 3) de moyens de connexion dont au moins un (3) comprend un organe (4a) accessible manuellement, en saillie de la surface extérieure de l'organe fonctionnel (1), **caractérisé en ce qu'**il comporte un boîtier métallique de protection formé par deux coques (5, 7) réunies ar une jonction de bords en correspondance des coques (5,7) autour de l'organe fonctionnel (1), le boîtier étant pourvu d'une fenêtre (8) d'accès à l'organe accessible manuellement.

2. Dispositif selon la revendication 1, **caractérisé en ce que** la fenêtre (8) est ménagée en totalité dans l'une (7) des coques.

3. Dispositif selon la revendication 1 ou la revendication 2, **caractérisé en ce qu'**au moins l'une (5) des coques constitue un moyen de cerclage (5c) d'un tube (T) sur une tétine (2) de connexion formant l'autre de types susdits de moyens de connexion de l'organe fonctionnel (1).

4. Dispositif selon la revendication 3, **caractérisé en ce que** le moyen (5c) de cerclage est un manchon (5b) de serrage du tube (T) sur la tétine (2) en une seule pièce avec la coque (5).

5. Dispositif selon l'une des revendications précédentes, **caractérisé en ce que** le boîtier porte des organes de fixation du dispositif à un élément de structure du véhicule.

6. Dispositif selon l'une des revendications précédentes, **caractérisé en ce que** la face intérieure d'au moins une coque (5,7) est pourvue d'une garniture élastique compressible (9) de calage du boîtier sur l'organe fonctionnel (1).

## Patentansprüche

1. Anschlussvorrichtung für einen Flüssigkeitskreis eines Kraftfahrzeugs, die ein Funktionsorgan (1) aus Kunststoff umfasst, das mit mindestens zwei Arten (2, 3) von Verbindungsmitteln versehen ist, von denen mindestens eines (3) ein manuell zugängliches Organ (4a) umfasst, das von der Außenfläche des Funktionsorgans (1) vorsteht, **dadurch gekennzeichnet, dass** sie ein metallenes Schutzgehäuse umfasst, das aus zwei Schalen (5, 7) gebildet ist, die durch eine Verbindung von übereinstimmenden Rändern der Schalen (5, 7) um das Funktionsorgan (1) herum zusammengefügt werden, wobei das Gehäuse mit einem Fenster (8) zum Zugriff auf das manuell zugängliche Organ versehen ist.

2. Vorrichtung nach Anspruch 1, **dadurch gekennzeichnet, dass** das Fenster (8) vollständig in einer (7) der Schalen ausgebildet ist.

3. Vorrichtung nach Anspruch 1 oder Anspruch 2, **dadurch gekennzeichnet, dass** mindestens eine (5) der Schalen ein Umreifungsmittel (5c) zur Umreifung eines Rohres (T) auf einem Verbindungsstutzen (2) darstellt, der das andere der oben genannten Arten von Verbindungsmitteln des Funktionsorgans (1) bildet.

4. Vorrichtung nach Anspruch 3, **dadurch gekennzeichnet, dass** das Umreifungsmittel (5c) eine Hülse (5b) zum Festspannen des Rohres (T) auf dem Stutzen (2) ist, die einstückig mit der Schale (5) ausgebildet ist.

5. Vorrichtung nach einem der vorhergehenden Ansprüche, **dadurch gekennzeichnet, dass** das Gehäuse Organe zur Befestigung der Vorrichtung an einem Strukturelement des Fahrzeugs trägt.

6. Vorrichtung nach einem der vorhergehenden Ansprüche, **dadurch gekennzeichnet, dass** die Innenseite mindestens einer Schale (5, 7) mit einer elastischen komprimierbaren Auskleidung (9) zum Festklemmen des Gehäuses an dem Funktionsorgan (1) versehen ist.

## Claims

1. A coupling device for a fluid circuit in a motor vehicle, the device comprising a functional member (1) of plastics material that is provided with at least two types (2, 3) of connection means, at least one of which (3) includes a manually-accessible member (4a) projecting from the outside surface of the functional member (1), the device being **characterized in that** it includes a protective metal box for protecting the functional member, which box is independent from at least one of the connection means (3) and is formed by two shells (5, 7) united by a seam around the functional member (1), the box being provided with a window (8) giving access to the manually-accessible member.

2. A device according to claim 1, **characterized in that** the window (8) is provided completely in one of the shells (7).

3. A device according to claim 1 or claim 2, **characterized in that** at least one of the shells (5) constitutes tightening means (5c) for clamping a tube (T) on a connection spigot (2) that forms the other one of the said types of connection means of the functional member (1).

4. A device according to claim 3, **characterized in that** the tightening means (5c) is a sleeve (5b) for clamping a tube (T) on the spigot (2), which sleeve is formed integrally with the shell (5).

5. A device according to any preceding claim, **characterized in that** the box carries members for fastening the device to a structural element of the vehicle.

6. A device according to any preceding claim, **characterized in that** the inside face of at least one shell (5, 7) is provided with a compressible resilient lining (9) for spacing the box apart from the functional member (1).
